# EUROPÄISCHE PATENTSCHRIFT

(11) **EP 2 785 794 B1**
(45) Veröffentlichungstag und Bekanntmachung des Hinweises auf die Patenterteilung: **23.08.2017**
(21) Anmeldenummer: 12791212.9
(22) Anmeldetag: 28.11.2012
(51) Int. Cl.: C08L 69/00, C08K 7/00, B29C 45/00, B29C 45/73

(54) **FORMKÖRPER MIT HOHER OBERFLÄCHENGÜTE**
MOLDED BODIES HAVING HIGH SURFACE QUALITY
CORPS MOULÉS À QUALITÉ DE SURFACE ÉLEVÉE

(30) Priorität: 30.11.2011 EP 11191310
(43) Veröffentlichungstag der Anmeldung: 08.10.2014
(73) Patentinhaber: Covestro Deutschland AG, 51373 Leverkusen (DE)
(72) Erfinder: THULKE, Thomas, 50733 Köln (DE); GROSSER, Ulrich, 51515 Kürten (DE); DÖBLER, Martin, 40593 Düsseldorf (DE); SÄMISCH, Birte, 50670 Köln (DE); MEYER, Alexander, 40489 Düsseldorf (DE); KLINKENBERG, Christoph, 50679 Köln (DE); OSER, Rafael, 47800 Krefeld (DE)
(74) Vertreter: Levpat
(86) Internationale Anmeldenummer: PCT/EP2012/073875
(87) Internationale Veröffentlichungsnummer: WO 2013/079555

(56) Entgegenhaltungen:
- EP-A1- 1 038 920
- EP-A1- 2 006 333
- WO-A1-02/059203
- WO-A1-2006/127246
- DE-A1- 2 721 886
- JP-A- 2006 082 267
- US-A- 4 243 575
- US-A- 5 714 537
- US-A1- 2008 246 181
- US-A1- 2009 192 257
- DATABASE WPI Week 200670 Thomson Scientific, London, GB; AN 2006-673106 XP002694792, -& JP 2006 240085 A (KONO SANGYO KK) 14. September 2006 (2006-09-14) in der Anmeldung erwähnt

## Beschreibung

Die Erfindung betrifft thermoplastische Formkörper mit einer hohen Oberflächengüte sowie ein Verfahren zur Herstellung der Formkörper. Darüber hinaus betrifft die vorliegende Erfindung aus den thermoplastischen Formteilen hergestellte beschichtete Fertigteile.

Thermoplastische Formkörper mit einer hohen Oberflächengüte werden immer dann benötigt, wenn es um die Herstellung von flächigen Fertigteilen geht, die zum Beispiel aus ästhetischen Gründen einen gleichmäßigen oder bei Bedarf auch hochglänzenden Eindruck vermitteln sollen. Von Bedeutung ist eine hohe Oberflächengüte auch, wenn ein Formkörper noch weiter funktionalisiert werden muss, zum Beispiel durch das Auftragen von Funktionsschichten, die für sich genommen ebenfalls eine hohe Oberflächengüte aufweisen müssen. In diesem Zusammenhang wäre es nachteilig, wenn bereits der Formkörper, welcher als Träger der Funktionsschichten fungieren soll, eine schlechte Oberfläche aufweisen würde.

Formkörper mit einer hohen Oberflächengüte lassen sich in verschiedenen Anwendungen beziehungsweise Fertigteilen einsetzen. Hierzu zählen unter anderem Fertigteile mit einem hohen Reflexionsvermögen. Ein Beispiel hierfür sind metallisierte Formkörper als Scheinwerferreflektoren, welche das Licht einer Lampe oder Strahlers bündeln, um ein definiertes Strahlprofil zu erzeugen. Aber auch für die Verwendung im Rahmen von Konzentratoren, d.h. von reflektierenden Spiegeln im Bereich der Photovoltaik, welche das Sonnenlicht beispielsweise auf ein optisches Bauelement fokussieren, die es dann auf eine Strom erzeugende Photovoltaikzelle lenken, ist der Einsatz der erfindungsgemäßen Formkörper von Interesse.

In den genannten Anwendungsfällen kommt es jedoch durch die intensive Wärmeeinwirkung der Sonne beziehungsweise der Strahlungsquelle zu einer starken Erwärmung des Substrats, die im Fall des Scheinwerfers insbesondere im Bereich der Lichtquelle höher ist, als in anderen Bereichen des Fertigteils.

Diese Erwärmung stellt besondere Anforderungen an die für die Herstellung der Formkörper verwendeten thermoplastischen Formmassen im Hinblick auf die Gewährleistung einer hohen Maßhaltigkeit bei gleichzeitigem Erhalt der hohen Oberflächengüte des Formkörpers.

Lichtlenkende bzw. lichtreflektierende Kunststoffformteile sind bereits in der Literatur beschrieben worden:
In der DE 3940436 C2 wird ein Verfahren zur Herstellung eines Reflektors, insbesondere für einen Kraftfahrzeug-Scheinwerfer offenbart. Hierbei werden nacheinander in eine Form ein thermoplastisches Material mit sehr geringer oder ohne Füllung, welches einen Teil des Formenhohlraums ausfüllt, und anschließend ein isotropes thermoplastisches Material eingespritzt, welches durch einen mineralischen oder organischen Füllstoff verstärkt ist.

Gegenstand der DE 4404604 A1 ist ein Verfahren zur Herstellung von Reflektoren aus Kunststoff für Beleuchtungsvorrichtungen aus einer starren Trägerschale versehen mit einer Haut aus glattem, mit Metall überzogenem thermoplastischen Kunststoff, beispielsweise aus Polycarbonat oder Polybutylenterephthalat, welcher mit einem starren Kern aus duroplastischen Kunststoffmaterial überformt wird.

JP 2000322918 A, JP 11241005 sowie JP 11241006 offenbaren einen Reflektor mit guten Oberflächeneigenschaften, einer guten Wärmebeständigkeit sowie einer hohen Haftung für Metalle. Die Metalle werden hierbei auf ein Formteil aus einer Kunststoffzusammensetzung, enthaltend Polyester, Polycarbonat, Füllstoff sowie weitere Inhaltsstoffe aufgebracht. Auf diese Weise hergestellte Reflektoren weisen jedoch nicht die erforderliche Dimensionsstabilität und/oder Oberflächengüte auf.

Die JP 2006240085 A beschreibt ein Verfahren zur Herstellung eines reflektierenden Bauteils mit hoher Wärmeformbeständigkeit und guter Haftung zu galvanisierten Oberflächen, wobei galvanisierte Oberflächen und der Schritt des Galvanisierens für hochpräzise Reflektoranwendungen nachteilig und ungeeignet sind.

### Somit war es eine Aufgabe der vorliegenden Erfindung einen Formkörper herzustellen, der

- Thermoplastisch herstellbar ist
- Einen niedrigen isotropen Wärmeausdehnungskoeffizienten besitzt
- Eine hohe Maßhaltigkeit besitzt
- Eine hohe Oberflächengüte besitzt, die auch unter thermischer Beanspruchung erhalten bleibt
- Eine möglichst hohe Temperaturbeständigkeit besitzt, mindestens aber 100°C
- Sich im Vakuum metallisieren lässt und
- Einen hohen Reflexionsgrad nach der Metallisierung aufweist.

Die gestellte Aufgabe konnte durch die Kombination eines Spritzgussprozesses mit dynamischer Werkzeugtemperierung und mit Hilfe bestimmter thermoplastischer Formmassen gelöst werden.

Es wurde überraschend gefunden, dass Zusammensetzungen bestehend aus
A) 30 - 90 Gew.-Teilen, besonders bevorzugt 50 - 85 Gew.-Teilen, aromatischen Polycarbonats,
B) 0 - 50 Gew.-Teilen, bevorzugt 0 - 40,0 Gew.-Teilen, besonders bevorzugt 5,0 - 20,0 Gew.-Teilen, kautschukmodifizierten Pfropfpolymerisats und/oder Vinylcopolymerisats,
C) 0 - 50,0 Gew.-Teilen, bevorzugt 0 - 30,0 Gew.-Teilen, besonders bevorzugt 10,0 - 25,0 Gew.-Teilen, Polyester, bevorzugt PBT oder PET,
D) 5,0 - 50,0 Gew.-Teilen, bevorzugt 10,0 - 30,0 Gew.-Teilen, besonders bevorzugt 15,0 bis 25,0 Gew.-Teilen, anorganischen Füllstoffs mit einer sphärischen Korngestalt, wobei der Füllstoff Quarz ist,
E) 0 - 5,0 Gew.-Teilen, bevorzugt 0,5 - 3,0 Gew.-Teilen, besonders bevorzugt 0,75 bis 1,25 Gew.-Teilen weiterer üblicher Polymeradditive, ausgewählt aus der Gruppe der Flammschutzmittel, der Antidrippingmittel, der Gleit- und Entformungsmittel, der Nukleiermittel, der Farbstoffe, Pigmente, UV-Stabilisatoren, Thermostabilisatoren, Hydrolysestabilisatoren sowie Antioxidantien,
wobei alle Gewichtsteilangaben in der vorliegenden Anmeldung so normiert sind, dass die Summe der Gewichtsteile aller Komponenten A+B+C+D+E in der Zusammensetzung 100 ergeben,
in Kombination mit einem Spritzgießen der Formteile aus entsprechenden Zsuammensetzungen mit dynamischer Werkzeugtemperierungzu dem gewünschten Eigenschaftsprofil führen.

In einer besonders bevorzugten Ausführungsform besteht die Zusammensetzung nur aus den Komponenten A, D und E, in einer weiteren bevorzugten Ausführungsform aus den Komponenten A - E in den oben angegebenen Mengenanteilen.

### Komponente A:

Polycarbonate im Sinn der vorliegenden Erfindung sind sowohl Homopolycarbonate als auch Copolycarbonate; die Polycarbonate können in bekannter Weise linear oder verzweigt sein.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 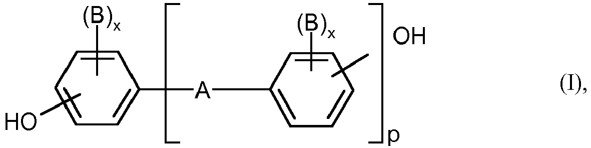 wobei
- A: eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 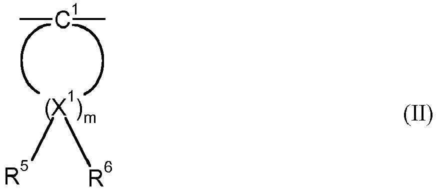 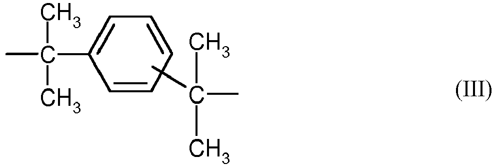
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-düsopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10Mol%, bezogen auf die Molsumme der jeweils eingesetzten Diphenole.

Die thermoplastischen, aromatischen Polycarbonate haben mittlere Molekulargewichte (Gewichtsmittel M_{w}, gemessen durch GPC (Gelpermeationschromatographie mit Polycarbonatstandard) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind polydiorganosiloxanhaltige Copolycarbonate; die Herstellung der polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
B.1 5 bis 95, vorzugsweise 20 bis 90 Gew.-%, besonders bevorzugt 30 bis 60 Gew.-%, wenigstens eines Vinylmonomeren auf
B.2 95 bis 5, vorzugsweise 80 bis 10 Gew.-%, besonders bevorzugt 70 bis 40 Gew.-%, einer oder mehrerer Pfropfgrundlagen.

Die Glasübergangstemperatur der Pfropfgrundlage ist vorzugsweise < 10°C, weiter bevorzugt < 0°C, und besonders bevorzugt < -20°C.

Die Pfropfgrundlage B.2 hat im allgemeinen eine mittlere Teilchengröße (d₅₀-Wert) von 0,05 bis 10,00 µm, vorzugsweise 0,10 bis 5,00 µm, weiter bevorzugt 0,20 bis 1,00 µm, und besonders bevorzugt von 0,25 bis 0,50 µm.

Monomere B.1 sind vorzugsweise Gemische aus
B.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C₁-C₈)-Alkylester (wie Methylmethacrylat, Ethylmethacrylat), und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid .

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2). Besonders bevorzugt ist reiner Polybutadienkautschuk.

Die Glasübergangstemperatur wird mittels dynamischer Differenzkalorimetrie (DSC) nach DIN EN 61006 bei einer Heizrate von 10 K/min mit Bestimmung der T_{g} als Mittelpunktbestimmung (Tangentenmethode) ermittelt.

Besonders bevorzugte Polymerisate B sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5,00, insbesondere 0,05 bis 2,00 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die Komponente C umfasst ein oder mehrere thermoplastische Polyalkylenterephthalate

Die Polyalkylenterephthalate sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und/oder Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D:

Diese anorganischen Füllstoffe sind spezielle anorganische Partikel mit Korngestalt ausgewählt aus der Gruppe solcher mit sphärischer Geometrie, wobei der Füllstoff Quarz ist. Eine stengelige Korngestalt ist im Sinne der vorliegenden Erfindung nicht geeignet.

Bevorzugt geeignet sind anorganische Füllstoffe in feinteiliger und/oder poröser Form mit großer äußerer und/oder innerer Oberfläche. Dabei handelt es sich bevorzugt um thermisch inerte anorganische Materialien insbesondere gepulverten Quarz wie Quarzmehl, amorphes SiO₂, gemahlenen Sand

Die in der Erfindung verwendeten Füllstoffe sind durch einen mittleren Durchmesser d₅₀% von 0,1 bis 10 µm, vorzugsweise von 0.2 bis 8.0 µm, weiter bevorzugt von 0.5 bis 5 µm, gekennzeichnet. In bevorzugter Ausführungsform handelt es sich bei Komponente D um feinteilige Quarzmehle, die durch eisenfreie Mahlung mit nachfolgender Windsichtung aus aufbereiteten Quarzsand hergestellt wurden.

Die in der Erfindung verwendeten Silikate sind durch einen mittleren Durchmesser d₅₀% von 2 bis 10 µm, vorzugsweise von 2.5 bis 8.0 µm, weiter bevorzugt von 3 bis 5 µm, und besonders bevorzugt von 3 µm, gekennzeichnet, wobei ein oberer Durchmesser d₉₅% von entsprechend 6 bis 34 µm, weiter bevorzugt von 6.5 bis 25.0 µm, noch weiter bevorzugt von 7 bis 15 µm, und besonders bevorzugt von 10 µm bevorzugt ist.

Bevorzugt weisen die Silikate eine spezifische BET-Oberfläche, bestimmt durch Stickstoffadsorption gemäß ISO 9277, von 0.4 bis 8.0 m²/g, weiter bevorzugt von 2 bis 6 m²/g, und besonders bevorzugt von 4.4 bis 5.0 m²/g auf.

Weiter bevorzugte Silikate weisen nur maximal 3 Gew.% Nebenbestandteile auf, wobei vorzugsweise der Gehalt an

Al₂O₃<2.0 Gew.%,

Fe₂O₃<0.05 Gew.%,

(CaO + MgO) <0.1 Gew.%,

(Na₂O + K₂O) < 0.1 Gew.%)

ist, jeweils bezogen auf das Gesamtgewicht des Silikats.

Bevorzugt werden Silikate mit einem pH-Wert, gemessen gemäß ISO 10390 in wässriger Suspension im Bereich, 6 bis 9 , weiter bevorzugt 6.5 bis 8.0 eingesetzt.

Sie weisen darüber hinaus eine Ölabsorptionszahl gemäß ISO 787-5 von bevorzugt 20 bis 30 g/100 g.

Eine weitere vorteilhafte Ausführungsform verwendet Talk in Form von feinvermahlenen Typen mit einem mittleren Partikeldurchmesser d₅₀ von <10 µm, bevorzugt <5 µm, besonders bevorzugt <2 µm, ganz besonders bevorzugt <1,5 µm.

Die Korngrößenverteilung wird durch Windsichten bestimmt.

Besonders bevorzugt kommen anorganische Füllstoffe, insbesondere Silikate, zum Einsatz, die eine Beschichtung mit silicium-organischen Verbindungen haben, wobei bevorzugt Epoxysilan-, Methylsiloxan-, und Methacrylsilan-Schlichten zum Einsatz kommen. Besonders bevorzugt ist eine Epoxysilanschlichte.

Die Beschlichtung von anorganischen Füllstoffen erfolgt nach den allgemeinen, dem Fachmann bekannten Verfahren.

### Komponente E:

Die Zusammensetzung kann als Komponente E weitere Zusätze enthalten. Als weitere Zusätze gemäß Komponente E kommen insbesondere übliche Polymeradditive wie Flammschutzmittel (z.B. organische Phosphor- oder Halogenverbindungen, insbesondere Bisphenol-A basierendes Oligophosphat), Antidrippingmittel (beispielsweise Verbindungen der Substanzklassen der fluorierten Polyolefine, z.B. Polytetrafluorethylen, der Silikone sowie Aramidfasern), Gleit- und Entformungsmittel, vorzugsweise Pentaerythrittetrastearat, Nukleiermittel, Stabilisatoren (beispielsweise UV- , Thermo- und/oder Hydrolysestabilisatoren sowie Antioxidantien), sowie Farbstoffe und Pigmente (beispielsweise Ruß, Titandioxid oder Eisenoxid) in Frage.

Als Stabilisatoren werden insbesondere Phosphor-basierte und/oder phenolische Stabilisatoren, vorzugsweise Tris(2,4-di-tert-butyl-phenyl)-phosphit beziehungsweise 2,6-Di-tert-butyl-4-(octadecanoxycarbonylethyl)phenol sowie deren Mischungen eingesetzt.

### Kompoundierung:

Die Herstellung der erfindungsgemäßen Polymer-Zusammensetzungen enthaltend die Komponenten A) bis E) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Additive der erfindungsgemäßen Zusammensetzung durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

### Spritzgussverfahren:

Der Prozess der dynamischen Werkzeugtemperierung im Spritzguss ist dadurch gekennzeichnet, dass die Werkzeugwand vor dem Einspritzen der Schmelze zügig aufgeheizt wird. Durch die erhöhte Werkzeugtemperatur wird das frühzeitige Erstarren der Schmelze verhindert, sodass unter anderem eine höhere Abformgenauigkeit der Werkzeugoberfläche möglich ist und sich die Qualität der Bauteiloberfläche verbessert. Die Temperatur der Werkzeugwand sollte im Bereich der Vicattemperatur +/- 20°C, bevorzugt im Bereich +/- 10°C, besonders bevorzugt im Bereich +5°C liegen. Des Weiteren ist die dynamische Werkzeugtemperierung dadurch gekennzeichnet, dass die Temperatur der Werkzeugwand nach dem Einspritzvorgang möglichst schnell wieder auf die ursprüngliche Temperatur heruntergekühlt wird und das Bauteil wie üblich bis zur Entformungstemperatur im Werkzeug abkühlt. Für die nachfolgend genannten Beispiele wurde die dynamische Werkzeugtemperierung mithilfe einer Induktionsheizung angewendet.

### Metallisierung:

Der Auftrag von Metallen auf das Polymer kann über verschiedene Methoden wie z.B. durch Aufdampfen oder Sputtern geschehen. Die Verfahren sind näher beschrieben z.B. in "Vakuumbeschichtung Bd.1 bis 5", H. Frey, VDI-Verlag Düsseldorf 1995 oder "Oberflächen- und Dünnschicht-Technologie" Teil 1, R.A. Haefer, Springer Verlag 1987.

Um eine bessere Metallhaftung zu erreichen und um die Substratoberfläche zu reinigen, werden die Substrate normalerweise einer Plasmavorbehandlung unterzogen. Eine Plasmavorbehandlung kann u. U. die Oberflächeneigenschaften von Polymeren verändern. Diese Methoden sind z.B. bei Friedrich et al. in Metallized plastics 5 & 6: Fundamental and applied aspects und H. Grünwald et al. in Surface and Coatings Technologiy 111 (1999) 287-296 beschrieben.

Weitere Schichten wie korrosionsmindernde Schutzschlichten kann in einem PECVD (plasma enhanced chemical vapour deposition) oder Plasmapolymerisationsprozess aufgebracht werden. Hierbei werden niedrigsiedende Precursoren haupsächlich auf Siloxan-Basis in ein Plasma verdampft und dadurch aktiviert, so dass sie einen Film bilden können. Typische Substanzen hierbei sind Hexamethyldisiloxan (HMDSO), Tetramethyldisiloxan, Decamethylcyclopentasiloxan, Octamethylcyclotetrasiloxan und Trimethoximethylsilan.

Mögliche Metalle sind bevorzugt Ag, Al, Ti, Cr, Cu, VA-Stahl, Au, Pt, besonders bevorzugt Ag, Al, Ti oder Cr.

### Prüfung der Formmassen

### Thermischer Belastungstest

Die Musterplatten wurden bei definierten Temperaturen jeweils 1 Std. im Ofen gelagert. Die Ofenlagerung dient der Nachstellung einer möglichen thermischen Belastung der Bauteile im späteren Einsatz. Bei diesem Test werden die Musterplatten stufenweise bei steigender Ofentemperatur gelagert. Pro Temperaturstufe wird jeweils ein Satz Probekörper verwendet. Als **maximale Einsatztemperatur** ist die Temperatur definiert, bis zu der keine sichtbare Verschlechterung des Oberflächenreflexionsgrades eintritt.

### Messgrößen

Die Wärmeformbeständigkeit wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80x10x4 mm.

Die Wärmeausdehnungskoeffizienten (CLTE) wurden gemäß DIN ISO 11359-1,-2 (Linearer Wärmeausdehnungskoeffizient, parallel / senkrecht, bei 23 bis 55 °C in der Einheit 10⁻⁴/K) gemessen.

Der Reflexionsgrad wurde an metallisieren Musterplatten in Anlehnung an ASTM E 1331-04 gemessen. Es wurden separate Messungen mit Glanz "specular included" (Reflexion gesamt [%]) und Messungen ohne Glanz "specular excluded" (Reflexion diffus [%]) durchgeführt. Die direkte Reflexion [%] wurde über den Zusammenhang Rdirekt = Rgesamt - Rdiffus errechnet. Als Messgerät wurde ein Hunter UltraScan PRO mit eingebauter Photometerkugel verwendet.

### Verwendete Bestandteile:

### Komponente A1

Lineares Polycarbonat auf Basis Bisphenol-A mit einer intrinsischen Viskosität von 1,255 in Dichlormethan bei 25°C und einer Konzentration von 0,5g/100ml.

### Komponente A2

Lineares Polycarbonat auf Basis Bisphenol-A mit einer intrinsischen Viskosität von 1,270 in Dichlormethan bei 25°C und einer Konzentration von 0,5g/100ml.

### Komponente A3

Lineares Polycarbonat auf Basis Bisphenol-A mit einer intrinsischen Viskosität von 1,290 in Dichlormethan bei 25°C und einer Konzentration von 0,5g/100ml.

### Komponente Ba (reines B.1 / SAN):

Copolymerisat aus 77 Gew% Styrol und 23 Gew% Acrynitril mit einem gewichtsgemittelten Molekulargewicht Mw von 130 Kg/mol (bestimmt durch GPC), hergestellt nach dem Masseverfahren.

### Komponente Bb (Pfropfpolymerisat aus B.1 und B.2 mit Silikon-Acrylatpfropf):

Schlagzähmodifikator, Styrol-Acrylnitril-modifizierter Silikon-Acrylat-Kautschuk" Metablen^{®} SRK 200 der Firma Mitsubishi Rayon Co., Ltd., CAS 178462-89-0.

### Komponente Bc (Pfropfpolymerisat aus B.1 und B.2 mit Polybutadienpfropf):

ABS hergestellt im Massepolymerisationsverfahren mit einem Acrylnitril : Butadien : Styrol-Verhältnis von 21 : 10 : 69

### Komponente C1:

Lineares Polyethylenterephthalat mit einer intrinsischen Viskosität von 0.62 gemessen in Phenol/o-Dichlorbenzol (1:1 Gew.-Teile) bei 25°C

### Komponente D1:

Es wurde Quarzmehl der Firma Quarzwerke GmbH (50226 Frechen, Deutschland) verwendet, welches unter dem Handelsnamen Sikron SF 600 verfügbar ist (d₅₀= 3µm, d₉₅ = 10µm, unbeschlichtet).

### Komponente D2:

HTP Ultra 5C, Talk der Firma Imifabi S.p.A. mit einem Talk mit einem SiO2 Gehalt von 61,5%, einem MgO-Gehalt von 31 %, einem Al₂O₃ Gehalt von 0.4 %. (mittlerer Partikeldurchmesser: 0,5 µm)

### Komponente D3:

Glasfaser mit einem mittleren Durchmesser von 13,7 µm und einer durchschnittlichen Länge von 3,0-4,0 mm (beschlichtet für Polycarbonatanwendungen).

### Komponente E1:

### Pentaerythrittetrastearat als Gleit-/Entformungsmittel

### Herstellung des Granulats

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C-290°C kompoundiert und granuliert. Die fertigen Granulate werden auf einer Spritzgussmaschine wie unten beschrieben zu den entsprechenden Probekörpern verarbeitet.

### Herstellung der Probekörper:

Für die nachfolgend genannten Beispiele wurde die dynamische Werkzeugtemperierung mithilfe einer Induktionsheizung angewendet. Bei den Probekörpern handelt es sich um DIN A5 große Musterplatten mit verschiedenen Oberflächenstrukturen. Die optischen Messungen wurden in Bereichen mit Hochglanzoberflächen vorgenommen. Die für die Herstellung der Musterplatten eingestellten Werkzeug- und Massetemperaturen sind in der Tabelle "Eigenschaften und Verarbeitungsparameter" dargestellt.

### Metallisierungsprozess:

Die Beschichtungsanlage bestand aus einer Vakuumkammer bei der die Proben auf einem rotierenden Probenhalter positioniert wurden. Der Probenhalter rotierte mit ca. 20 U/min. Die Prüfkörper wurden, bevor sie in die Vakuumkammer eingebracht wurden, mit ionisierter Luft abgeblasen, um sie von Staub zu befreien. Danach wurde die Vakuumkammer mit den Prüfkörper auf einen Druck p ≤ 1· 10⁻⁵ mbar evakuiert. Anschließend wurde mit Argon Gas bis zu einem Druck von p = 0.1 mbar für 1 min mit 500W ein Plasma gezündet und die Proben diesem Plasma ausgesetzt (Plasmavorbehandlung). Als Plasmaquelle wurde eine Diodenanordung bestehend aus 2 parallelen Metallelektroden verwendet, die mit einer Wechselfrequenz von 40 kHz und einer Spannung größer 1000V betrieben wurde. Danach wurden die Proben metallisiert. Dafür wurde ArGas mit einem Druck von 5· 10⁻³ mbar eingelassen. Mittels DC-Magnetron wurde eine Aluminium-Schicht von ca. 100 nm Dicke mit einer Leistungsdichte von 6,4 W/cm² auf die Proben aufgebracht. Die Sputterzeit betrug 2,5 min. Danach wurde mittels Plasmapolymerisation eine Korrosionsschutzschicht aus HMDSO aufgebracht. Dazu wurde HMDSO verdampft und der Dampf in die Vakuumkammer eingelassen bis sich ein Druck von ca. 0,08 mbar ergab. Danach wurde ein Plasma mit der oben beschriebenen Diodenanordnung bei 1500W gezündet während 1 Minute die Korrosionschutzschicht aufgebracht.

### Zusammensetzungen:

| Zusammensetzung [Gew.-%] | **V0** | **V1** | **V2** | **1(V)** | **2** | **3(V)** | **4(V)** |
|---|---|---|---|---|---|---|---|
| **A1** | | - | 35% | 63% | - | - | 82% |
| **A2** | 99,7% | 62% | | | | 49,3% | - |
| **A3** | | | 50,5% | **-** | 80% | - | |
| **Ba** | - | 27% | - | - | - | 16% | - |
| **Bb** | - | 0,5% | - | - | - | 6% | - |
| **Bc** | - | - | - | - | - | 8% | 8,6% |
| **C1** | - | - | - | 21% | - | - | - |
| **D1** | - | - | - | - | 20% | - | - |
| **D2** | - | - | - | 15% | - | 20% | 8,6% |
| **D3** | - | 10% | 14% | - | - | - | - |
| **E1** | 0,3% | 0,5% | 0,5% | 1% | - | 0,7% | 0,8% |

### Eigenschaften und Verarbeitungsparameter:

| | **Vergleichsbeispiele** | | | | | | **Beispiel (erfindungs gemäß)** |
|---|---|---|---|---|---|---|---|
| **Zusammensetzung** | **V0** | **V1** | **V2** | **1(V)** | **3(V)** | 4 ( V ) | 2 |
| CLTE parallel [10⁻⁴/K] | 0,65 | 0,38 | 0,35 | 0,45 | 0,4 | 0,55 | 0,5 |
| CLTE senkrecht [10⁻⁴/K] | 0,65 | 0,62 | 0,65 | 0,45 | 0,56 | 0,65 | 0,5 |
| Vicat @ 50 N; 50 °C/h [°C] | 143 | 132 | 144 | 140* | 128 | 140 | 143 |

| **Normale Verarbeitung:** | | | | | | | |
|---|---|---|---|---|---|---|---|
| Massetemperatur [°C] | 300 | 280 | 315 | 280 | 280 | 270 | 310 |
| Werkzeugtemperatur [°C] | 100 | 100 | 130 | 80 | 100 | 100 | 115 |
| Visuelle Beurteilung (vor Metallisierung) | ++ | -- | -- | - | o | - | o |
| Direkte Reflexion nach Metallisierung [%] | 84,01 | 74,66 | 81,08 | 62,18 | 74,63 | 59,41 | 64,17 |

| **Verarbeitung mit dynamischer Werkzeugtemperierung:** | | | | | | | |
|---|---|---|---|---|---|---|---|
| Massetemperatur [°C] | 300 | 280 | 315 | 280 | 280 | 270 | 310 |
| Werkzeugtemperatur [°C] | 100 | 100 | 130 | 80 | 100 | 100 | 115 |
| Kurzzeitige WZ-Temp. [°C] | 156 | 143 | 156 | 153 | 147 | 155 | 153 |
| Visuelle Beurteilung (vor Metallisierung) | ++ | + | o | ++ | ++ | ++ | ++ |
| Direkte Reflexion nach Metallisierung [%] | 81,62 | 81,60 | 82,11 | 82,87 | 82,36 | 80,32 | 82,57 |
| Maximale Einsatztemp. [°C] | 135 | 100 | 120 | 115 | 100 | 125 | 125 |

| | | | | | | | |
|---|---|---|---|---|---|---|---|
| * Vicat @ 50 N; 120 °C/h [°C] | | | | | | | |

### Ermittlung der max. Einsatztemperaturen an den Beispielen 1(V), 2 (erfindungsgemäß) und 3(V):

| | Direkte Reflexion% | | |
|---|---|---|---|
| Temperatur | 1 | 2 | 3 |
| 25 °C | 82,36 | 82,57 | 80,32 |
| 105°C | 82,12 | 82,76 | 79,90 |
| 110°C | 82,25 | 82,30 | 80,59 |
| 115°C (=Maximale Temperatur für Beispiel 1(V)) | 81,14 | 82,26 | 80,30 |
| 120°C | 76,09 | 82,44 | 80,08 |
| 125°C (=Maximale Temperatur für Beispiel 2 (erfmdungsgemäß),3(V)) | 67,09 | 82,48 | 79,35 |
| 130°C | 41,87 | 80,06 | 62,91 |
| 135°C | - | 75,09 | - |

## Patentansprüche

1. Verfahren zur Herstellung von Formteilen mit erhöhter Kratzfestigkeit der Oberfläche, verbesserter Maßhaltigkeit und verbessertem Glanz der Oberfläche umfassend die Schritte:
a) Kompoundierung der Zusammensetzungen enthaltend die Komponenten A) bis E) zur Herstellung eines Granulats der thermoplastischen Zusammensetzung bestehend aus
A) 30,0 bis 90,0 Gew.-Teilen mindestens eines aromatischen Polycarbonats,
B) 0,0 Gew.-Teilen bis 50,0 Gew.-Teilen kautschukmodifizierten Pfropfpolymerisats und/oder Vinylcopolymerisats,
C) 0,00 bis 50,00 Gew.-Teilen Polyester,
D) 5,0 bis 50,0 Gew.-Teilen mindestens eines anorganischen Füllstoffs mit einer sphärischen Korngestalt, wobei der Füllstoff Quarz ist,
E) 0,00 bis 5,00 Gew.-Teilen weiterer üblicher Additive, ausgewählt aus der Gruppe der Flammschutzmittel, der Antidrippingmittel, der Gleit- und Entformungsmittel, der Nukleiermittel, der Farbstoffe, Pigmente, UV-Stabilisatoren, Thermostabilisatoren, Hydrolysestabilisatoren sowie Antioxidantien,
wobei die Summe der Gewichtsteile der Komponenten A) bis E) sich zu 100 Gewichtsteilen addiert,
b) Spritzgießen der Formteile aus dem so hergestellten Granulat mit dynamischer Werkzeugtemperierung.

2. Verfahren nach Anspruch 1, **dadurch gekennzeichnet, dass** die thermoplastische Zusammensetzung die Komponenten A bis E in den folgenden Mengen enthält:
A) 50,0 bis 85,0 Gew.-Teile mindestens eines aromatischen Polycarbonats,
B) 0 Gew.-Teile bis 20,0 Gew.-Teile kautschukmodifiziertes Pfropfpolymerisat und/oder Vinylcopolymerisat,
C) 10,00 bis 25,00 Gew.-Teile Polyester,
D) 15,0 bis 30,0 Gew.-Teile mindestens eines anorganischen Füllstoffs mit einer sphärischen Korngestalt, wobei der Füllstoff Quarz ist,
E) 0,75 bis 1,25 Gew.-Teile weitere übliche Additive,
wobei die Summe der Gewichtsteile der Komponenten A) bis E) sich zu 100 Gewichtsteilen addiert.

3. Verfahren nach Anspruch 1 oder 2, **dadurch gekennzeichnet, dass** sich als weiterer Schritt eine Metallisierung der Oberfläche anschließt.

4. Verfahren nach Anspruch 1, 2 oder 3, **dadurch gekennzeichnet, dass** die Oberfläche des Formteils plasmavorbehandelt wird mit einer Wechselfrequenz von 40 kHz und einer Spannung > 1000V an der Plasmaquelle.

5. Verfahren nach Anspruch 3 oder 4, **dadurch gekennzeichnet, dass** das Metall Aluminium ist.

6. Verfahren nach Anspruch 3 oder 4, **dadurch gekennzeichnet, dass** eine weitere Korrosionsschutzschicht mittels Plasmapolymerisation aufgebracht wird.

7. Verfahren nach Anspruch 1 oder 2, **dadurch gekennzeichnet, dass** der Quarz einen mittleren Durchmesser d50% von 0,1 bis 10 µm aufweist.

8. Formteil, hergestellt nach einem Verfahren gemäß Anspruch 1.

9. Formteil gemäß Anspruch 8, **dadurch gekennzeichnet, dass** es im Vakuum metallisiert wurde.

## Claims

1. Process for the production of shaped parts having increased scratch resistance of the surface, improved dimensional accuracy and improved gloss of the surface, comprising the steps of:
a) compounding of the compositions comprising components A) to E) for the production of granules of the thermoplastic composition consisting of
A) 30.0 to 90.0 parts by wt. of at least one aromatic polycarbonate,
B) 0.0 part by wt. to 50.0 parts by wt. of rubber-modified graft polymer and/or vinyl copolymer,
C) 0.00 to 50.00 parts by wt. of polyester,
D) 5.0 to 50.0 parts by wt. of at least one inorganic filler having a spherical grain shape, where the filler is quartz,
E) 0.00 to 5.00 parts by wt. of further conventional additives, selected from the group of the flame retardants, the antidripping agents, the lubricants and mould-release agents, the nucleating agents, the dyes, pigments, UV stabilizers, heat stabilizers, hydrolysis stabilizers and antioxidants,
where the sum of the parts by weight of components A) to E) gives a total of 100 parts by weight,
b) injection moulding of the shaped parts from the granules produced in this way with dynamic mould temperature control.

2. Process according to claim 1, **characterized in that** the thermoplastic composition comprises the components A to E in the following amounts:
A) 50.0 to 85.0 parts by wt. of at least one aromatic polycarbonate,
B) 0 part by wt. to 20.0 parts by wt. of rubber-modified graft polymer and/or vinyl copolymer,
C) 10.00 to 25.00 parts by wt. of polyester,
D) 15.0 to 30.0 parts by wt. of at least one inorganic filler having a spherical grain shape, where the filler is quartz,
E) 0.75 to 1.25 parts by wt. of further conventional additives,
wherein the sum of the parts by weight of components A) to E) gives a total of 100 parts by weight.

3. Process according to claim 1 or 2, **characterized in that** metallization of the surface follows as a further step.

4. Process according to claim 1, 2 or 3, **characterized in that** the surface of the shaped part is subjected to plasma pretreatment with an alternating frequency of 40 kHz and a voltage of > 1000 V at the plasma source.

5. Process according to claim 3 or 4, **characterized in that** the metal is aluminium.

6. Process according to claim 3 or 4, **characterized in that** a further corrosion protection layer is applied by means of plasma polymerization.

7. Process according to claim 1 or 2, **characterized in that** the median diameter of the quartz d₅₀% is from 0.1 to 10 µm.

8. Shaped part produced by a process according to claim 1.

9. Shaped part according to claim 8, **characterized in that** it has been metallized in vacuo.

## Revendications

1. Procédé de fabrication de pièces moulées présentant une résistance aux éraflures élevée de la surface, une stabilité dimensionnelle améliorée et une brillance améliorée de la surface, comprenant les étapes suivantes :
a) le mélange des compositions contenant les composants A) à E) pour la fabrication d'un granulat de la composition thermoplastique constitué par :
A) 30,0 à 90,0 parties en poids d'au moins un polycarbonate aromatique,
B) 0,0 partie en poids à 50,0 parties en poids d'un copolymère de vinyle et/ou d'un polymère greffé modifié par du caoutchouc,
C) 0,00 à 50,00 parties en poids d'un polyester,
D) 5,0 à 50,0 parties en poids d'au moins une charge inorganique ayant une forme de particule sphérique, la charge étant le quartz,
E) 0,00 à 5,00 parties en poids d'autres additifs usuels, choisis dans le groupe constitué par les agents ignifuges, les agents anti-égouttement, les lubrifiants et les agents de démoulage, les agents de nucléation, les colorants, les pigments, les stabilisateurs UV, les thermostabilisateurs, les stabilisateurs d'hydrolyse, ainsi que les antioxydants,
la somme des parties en poids des composants A) à E) étant de 100 parties en poids,
b) le moulage par injection des pièces moulées à partir du granulat ainsi fabriqué avec conditionnement dynamique du moule.

2. Procédé selon la revendication 1, **caractérisé en ce que** la composition thermoplastique contient les composants A à E en les quantités suivantes :
A) 50,0 à 85,0 parties en poids d'au moins un polycarbonate aromatique,
B) 0 partie en poids à 20,0 parties en poids d'un copolymère de vinyle et/ou d'un polymère greffé modifié par du caoutchouc,
C) 10,00 à 25,00 parties en poids d'un polyester,
D) 15,0 à 30,0 parties en poids d'au moins une charge inorganique ayant une forme de particule sphérique, la charge étant le quartz,
E) 0,75 à 1,25 partie en poids d'autres additifs usuels,
la somme des parties en poids des composants A) à E) étant de 100 parties en poids.

3. Procédé selon la revendication 1 ou 2, **caractérisé en ce qu'**une métallisation de la surface s'ensuit en tant qu'étape supplémentaire.

4. Procédé selon la revendication 1, 2 ou 3, **caractérisé en ce que** la surface de la pièce moulés est prétraitée par plasma avec une fréquence alternative de 40 kHz et une tension > 1 000 V de la source de plasma.

5. Procédé selon la revendication 3 ou 4, **caractérisé en ce que** le métal est l'aluminium.

6. Procédé selon la revendication 3 ou 4, **caractérisé en ce qu'**une couche anticorrosion supplémentaire est appliquée par polymérisation plasma.

7. Procédé selon la revendication 1 ou 2, **caractérisé en ce que** le quartz présente un diamètre moyen d50 % de 0,1 à 10 µm.

8. Pièce moulée, fabriquée par un procédé selon la revendication 1.

9. Pièce moulée selon la revendication 8, **caractérisée en ce qu'**elle a été métallisée sous vide.
